# EUROPEAN PATENT APPLICATION

(11) **EP 2 117 209 A1**
(43) Date of publication of application: **11.11.2009**
(21) Application number: 08290434.3
(22) Date of filing: 07.05.2008
(51) Int. Cl.: H04M 3/30

(54) **Tool and method for prequalifying channels in an access network**

(71) Applicant: Alcatel Lucent, 75008 Paris (FR)
(72) Inventor: Guenach, Mamoun, 1830 Machelen (BE); Maes, Jochen, 2431 Veerle (BE); Peeters, Michael, 1742 Ternat (BE)
(74) Representative: BiiP cvba

(57) **Abstract**

The present invention is related to a method for prequalifying a plurality of communication channels in an access network. The method comprises the steps of :
- gathering information on crosstalk coupling between at least some of the communication channels from a database containing information indicative of crosstalk coupling between the at least some communication channel, determining prequalification information relating to the plurality of communication channels from the information from the database.

## Description

### Field of the Invention

The present invention generally relates to the field of data transmission technology and more in particular to a device and method for prequalifying channels in an access network.

### Background of the Invention

Next generation services require higher broadband throughput than typically available from exchange or remote node based digital subscriber lines (DSL). There is thus a great interest in increasing the capacity of copper pairs and binders. A binder is a single cable comprising a plurality of individual twisted pairs of telephone wires. However, the DSL access network is becoming harder to manage. The advanced knowledge required to correctly set the many parameters of a xDSL connection is often lacking. This causes substandard performance and customer dissatisfaction.

The twisting of telephone wires limits electromagnetic interference between nearby lines. However, signals from one line can still couple into other lines of the same binder or even of another binder. As a result, a local receiver can see signals from other lines, thus increasing the noise power and degrading the received signal quality on that line.

The coupling of unwanted signals from one or more lines into another line is known as crosstalk. In xDSL it can take two forms: near-end crosstalk (NEXT) and far-end crosstalk (FEXT). NEXT results when signals couple into the line transmitted in the direction opposite to the received signal. In contrast, FEXT occurs when a local receiver sees signals transmitted by one or more remote transmitters. In this case, interfering signals travel in the same direction as the received signal. The level of FEXT detected depends on the number of interferers and their proximity to the line of interest, the power spectral densities (PSDs) of the interfering signals and the frequency band in which FEXT occurs. The coupling of signals is often modelled to be proportional to the square of frequency. In addition, the detected FEXT level depends on the line itself: FEXT is proportional to both the line's attenuation and the line length over which coupling of unwanted signals occurs. In contrast to NEXT, which is essentially independent of the line's length and attenuation, on loops longer than a few hundred meters the absolute FEXT level decreases with increasing line length, because unwanted signals are attenuated by the length of the line into which they couple. For this reason, FEXT is usually an insignificant impairment on long lines such as ADSL, which typically span more than 3 km. FEXT is more significant on shorter VDSL lines (e.g. 400m), on which it can dominate noise profiles.

As crosstalk interference coming from other lines can drastically degrade the received signal, it is a major limiting factor in xDSL communications. Operators consequently try to apply a variety of measures like e.g. advanced signal processing techniques in order to reduce the impairment due to crosstalk.

A known way to achieve a significant throughput enhancement consists in applying Dynamic Spectrum Management (DSM). The DSM approach compensates for DSL performance impairments introduced by crosstalk. Management of power levels and spectral usage (DSM levels 0. 1 and 2) aims to improve the performance of the poorest lines while minimizing the impact upon other lines. DSM level 3 goes one step further to process the transmitted or received signals in such a way that the crosstalk is effectively cancelled, boosting throughput for all lines. In order to achieve the significant benefits offered by DSM, all lines that interact with each other need to be coordinated. To effectively deploy and benefit from the advanced DSM level 3 techniques, an entire cable binder needs to be controlled from the same line card / DSL Access Multiplexer (DSLAM). Most benefits of DSM are not accessible unless all lines in a cable are controlled by a single device or when several devices have a high level of coordination and communication. Having multiple uncoordinated devices feeding the same cable binder is incompatible with DSM level 3 techniques because it eliminates the possibility of managing the medium to the degree required to successfully benefit from DSM level 3.

As already mentioned, mitigating the self-crosstalk by taking actions at the transmitter and the receiver can improve the SNR and thus increase the achieved throughput. In both cases, some analogue or digital signal processing is required, which is called vectoring. This vectoring compensates the self-crosstalk present, while transmitting at full power if needed. Whereas DSM levels 1 and 2 reallocate spectra, reduce or maintain the overall power levels and come at marginal cost, DSM level 3 requires an increased processing power.

However, there are a number of challenges related to implementing DSM level 3:
- as the multiple lines strongly coupling within the same virtual binder may end at the same DSLAM in different line terminations (LTs) and different chips per LT, implementing the vectoring between LTs or between different chips is quite complex.
- as DSM3 gains are highly dependent on the access network topology, it remains unclear what will be the gain of DSM level 3 if implemented at a given access node.

In an attempt to compensate for the crosstalk effect, many, if not all, of the current best practices to determine transmit power spectral densities (PSDs) use very conservative and smooth models instead of real crosstalk channels, with a number of implicit assumptions, which, as already mentioned, may not be appropriate at all. These assumptions can cause miscalculation of the algorithms used e.g. for determining a power backoff (PBO), causing links to fail to come up or to underperform. Hence, detecting such crosstalk anomalies can yield additional input that would allow choosing an approach that does not fail or underperform.

Applying a power backoff to the transmit power spectral density is a way to mitigate the effect of near-far far-end crosstalk (FEXT). In an upstream scenario for example, transmitters must reduce their PSDs such that the levels of FEXT they inject into longer loops are lower. This process of reducing the upstream PSDs is known generically as upstream power backoff (UPBO). In a CO/RT scenario, whereby a digital subscriber line access multiplexer (DSLAM) is also located at a remote terminal (RT) between the central office (CO) and the customer premises equipment (CPE), the RT lines (i.e. the lines connecting the remote terminal with the CPE) have to perform a downstream power backoff (DPBO) to protect the downstream signal from the longer CO lines (i.e. the lines connecting the central office with the CPE).

Today, single-ended line testing (SELT) is used to extract the single loop characteristics based on reflectometry measurements on the line. A reflectogram is typically measured in the frequency domain. When converted to the time domain, the x-axis is representative for the time, as well as for the distance from the DSLAM. SELT provides information on the amount of segments in the loop, the segment lengths and gauges, and the presence of bridged taps. By correlating the single-loop characteristics of different lines, information can be obtained on the network topology.

Monitoring and policing of the rules imposed by a standard is even more important in an unbundled environment, where different operators are deploying DSLAMS in the same copper bundle network. Currently, some forms of power backoff policing are being looked at but these all relate to single line diagnostics, in which a DSLAM attempts to determine whether a CPE connected to that DSLAM is correctly applying power backoff.

Hence, there is a need for a tool to prequalify subscriber lines that for example would allow an operator to decide whether it is profitable to replace one or more line cards in a DSLAM by line terminations capable of some form of dynamic spectrum management. Such a tool could further have the advantageous feature of providing advice on how to reconnect the different lines at the access node.

A prerequisite for any form of bundle optimization is knowledge on the topology of the binders in the access network and the interactions (crosstalk) between pairs. However, even to the network operators this information is not readily available As already mentioned, they very often have little or no information on their legacy network topology, but the chances are high part of the information is outdated. Unfortunately, it is impossible to retrieve topology information on buried bundles and it is too expensive to send out technicians to every DSLAM to figure out how the lines are patched through. Therefore, when devising a tool for prequalifying subscriber lines, there is a need to acquire the knowledge on the topology and pair interactions in an automated fashion.

### Aims of the Invention

The present invention aims to provide a tool and method for prequalifying communication channels in an access network. The invention further aims to provide a method for constructing an information source for use in said tool and method.

### Summary of the Invention

The present invention relates to a method for prequalifying a plurality of communication channels in an access network. The method comprises the steps of :
- gathering information on crosstalk coupling between at least some of the communication channels from a database containing information indicative of crosstalk coupling between the at least some communication channels,
- determining prequalification information relating to the plurality of communication channels from the information from the database.

In a preferred embodiment the method further comprises the step of advising on reconnecting the plurality of communication channels according to the determined prequalification information. Optionally the method further comprises the step of actually modifying the connection of said plurality of communication channels according to said determined prequalification information.

Advantageously, in the step of gathering information also topology information is gathered from a database containing information on the topology of the communication channels.

Typically the prequalification information comprises at least one element of the group {SNR, SNR gain, data rate, data rate gain, reach, reach gain, power, power reduction}. In a preferred embodiment the prequalification information comprises dynamic spectrum management prequalification.

In another preferred embodiment the plurality of communication channels is a plurality of DSL loops connected to a DSL access node, to a group of co-located DSL access nodes or to a group of access nodes located in the same part of the access network (e.g. a group of CO and RT access nodes).

In a second aspect the invention relates to a method for constructing a database containing information indicative of crosstalk coupling for use in a method for prequalifying as previously described. The method comprises the steps of :
- determining an indication of the crosstalk coupling between a first and a second channel of a plurality of communication channels of an access network,
- deriving from the determined indication an upper bound for the crosstalk coupling between the first and second channel, and
- storing the upper bound in the database.

In a third aspect the invention relates to a tool for prequalifying a plurality of communication channels in an access network. The tool comprises :
- information gathering means for gathering information from a database containing information indicative of crosstalk coupling between at least some communication channels of said plurality, and
- processing means for determining prequalification information relating to said plurality of communication channels from said information from said database.

In an advantageous embodiment the processing means is further arranged for advising on reconnecting the plurality of communication channels according to the determined prequalification information. The information gathering means is preferably also arranged for gathering information on the topology of said communication channels.

In another preferred embodiment the device as described is integrated in an access node or in a network analyzer.

### Brief Description of the Drawing

Fig. 1 illustrates an overview of the device and method of the present invention.

Fig. 2 illustrates the segmentation of the DSL access network into serving areas.

Fig. 3 illustrates a further refinement of the access network.

### Detailed Description

The present invention is described below using the example of a DSL access network. However, it will be clear to the skilled person that the invention is not limited to this example. The tool and method of the invention may as well serve in any access network. Every network has a topology and its performance is impaired by crosstalk. For instance in wireless or optics, multiple access techniques are used based on frequency division multiplexing or orthogonal frequency division multiple access, in which the channel assigned to a user consists of a (set of) frequencie(s). Depending on the manner in which the information is transceived, crosstalk between frequency channels may occur. The terminology used in these technologies may differ. For example crosstalk may be referred to as co-channel interference. The various levels of dynamic spectrum management may be referred to as power control, interference cancellation, precoding, etc. Irrespective of the technology used in the access network, an indication of the crosstalk level can be obtained by processing a dataset containing information on signal-to-noise ratios taken at different instances. This knowledge can then be exploited to prequalify the system, for example to provide an indication of the gains that can be achieved by crosstalk mitigation techniques, for example power control, interference cancellation, or precoding.

In the present invention a tool for prequalifying various communication channels in an access network, like copper pairs of a given binder in a DSL access network. It is arranged for gathering information from a crosstalk database and, optionally, a topology database. This allows comparing the observed (possibly measured) crosstalk channels for the twisted pair channels with the crosstalk noise levels predicted by statistics and physics (i.e. from the line length, PSD settings, topology database and statistics, crosstalk statistics, ...). Access network analysis is useful for the introduction and deployment of advanced DSL services as it facilitates upgrade decisions. It also helps in identifying poor lines that cause network problems (such as strong crosstalkers).

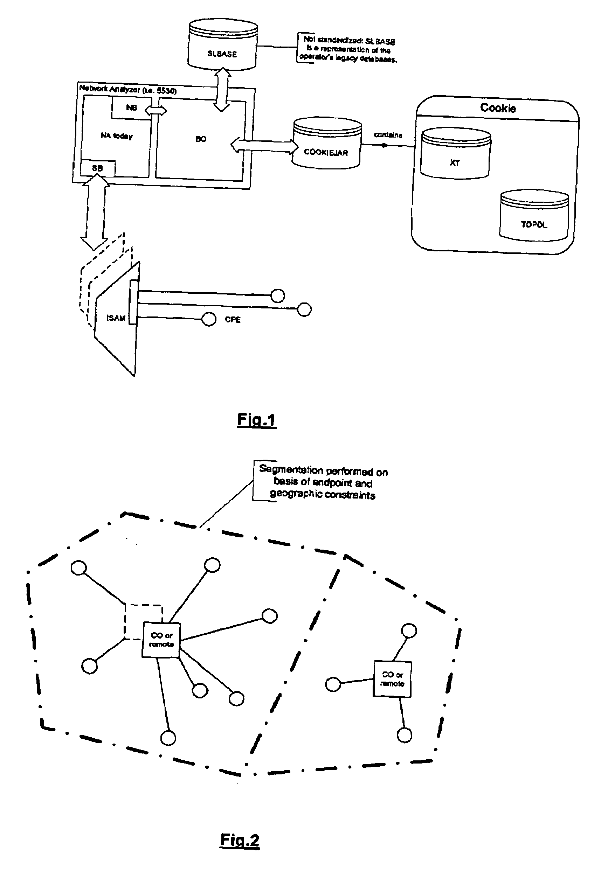

The method and tool of the present invention can be explained by means of Fig.1. In an advantageous embodiment the device (BO) for prequalifying a bundle of twisted pairs as in the invention is part of a network analyzer. However, it may as well be a stand-alone device, capable of communicating with a network analyzer or access node (access multiplexer) through a suitable interface or integrated in a network analyzer or in an access node.

The network analyzer is arranged for communicating with DSL access multiplexers (DSLAM) via a suitable interface. These DSLAMs can be co-located at a single location, but more likely they are distributed throughout the operator's access network at many different central office (CO) or remote node (RT) locations.

The device for subscriber line prequalification is arranged for gathering information from a crosstalk database that optionally the device can generate on its own. Optionally, the device is further arranged for communicating with a database or a plurality of databases provided by the operator of the DSL access network. The operator's database (denoted SLBASE in Fig.1) may contain subscriber loop data. Note that the information that typically can be expected from such a group of databases is likely not stored in a single logical location. The SLBASE database shown in Fig.1 should be considered as an abstraction of the operator's subscriber data. Although the exact format may vary, it can be assumed that at least the subscriber's address and the DSLAMs address can be deduced from the data in the operator's database, thus identifying the endpoints of the subscriber loop.

This prequalification contributes to dynamic bundle management, which can be seen as an expansion of dynamic line management (DLM). DLM determines the best configuration profile (in terms of power, coding, rate) for a service, depending on the measured line conditions. For bundle optimisation the relationships between DSL lines are taken into account. Different lines often show similar rate/stability issues that may be caused by a common crosstalker, noise source or binder issue. An optimization at the bundle level is particularly important for VDSL2, since in practical situations, this technology is limited by self-crosstalk. Identification of the strongest selfcrosstalkers allows mitigation procedures such as:
- isolation of the strongest self-crosstalkers
- work around the self-crosstalker by other means such a advanced PSD shaping and artificial noise/virtual noise settings,
- removing the self-crosstalk by cancellation or precoding techniques (i.e. applying so called dynamic spectrum management (DSM) - level 3 techniques)

The crosstalk coupling database is filled and kept up to date by the BO during normal operation, based on measurements and reports from the network analyzer and information derived from the operator's database (see below for more details). Different processes within the BO are responsible for the build-up, maintenance and mining of these databases, depending on the use case. Optionally, there is also a database for topology information (TOPOL).

The monitoring device of the invention is preferably arranged for cutting the access network into a number of distinct serving areas, e.g. via GIS (Geographical Information System) based algorithms. The serving areas can vary in shape and size depending on if they are CO or RT fed. Note that this cutting generates a coarse first segmentation of the access network. Fig.2 illustrates an example.

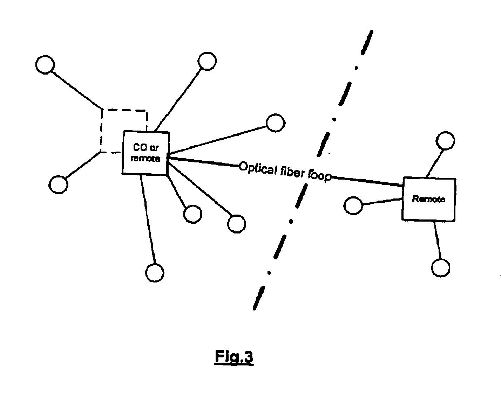

In an additional step a subsequent refinement of the network based on further knowledge of the remote terminals (RTs) may be preferable. Especially if at a certain point in time the system would be required to provide simulated DSM gains in the case that the RT locations would replace the current CO-fed endpoints of the subscriber lines, such a further refinement may be useful. Also, when RTs are subtended from the CO, a legacy database likely contains the CO as endpoint and not the RT location. This would invalidate the predictions, as well as increasing the granularity of the serving areas (see Fig.3).

Building up the crosstalk database (and, optionally, the topology database) is a process that can run continuously or can be triggered at a certain instant in time. It uses reports from the DSLAM, as well as, if available, data from the network analyzer and from the operator's database to constantly refine the database of crosstalk coupling between two lines. Because of the segmentation, this process runs on a single serving area, also allowing the distribution of the required measurements (as subscriber lines from different serving areas cannot be terminated in the same DSLAM).

In general the process of building up the crosstalk database can be described as follows. First a serving area has to be selected. Next, one gets all line states (active or down) and stores them in a state vector. Then all SNR reports on the active lines are collected and stored in a vector. At a later time one gets again the line states (i.e. whether the line is active or down) and stores them in a second state vector. For lines the state of which remains unchanged, the crosstalk cannot be directly measured. Therefore, an algorithm is used to determine an upper bound on the crosstalk level they induce. Then the crosstalk database is updated with the obtained numerical values. Lines having a different state in the second state vector than in the first have either joint or left the set of active lines, thereby causing a change in the observed crosstalk levels. An algorithm combines the information before and after joining/leaving to recalculate a (possibly more accurate) crosstalk upper bound.
Performing the procedure at several instants in time provides the database with ever more information as time progresses, thereby lowering the upper bounds. It is however possible that blind spots remain due to always-on users and users that always switch their modems on and off at similar times. To avoid this drawback, one can force a resync at a time of low activity, such that the blind spots are removed.

Another likely future scenario is the addition of the L2 state. In DSL, the L2 state is a low transmit power mode that can be entered when there is no or only a low amount of data traffic on the line. This is likely to cause more variations in the transmit power levels inside a serving area and makes the occurrence of blind spots less likely. It further renders retrains for the sake of database build-up unnecessary. Another likely future scenario is the addition of the already mentioned DSM level 3 techniques. In this case, the crosstalk coefficients are determined by the vectoring unit and can be directly read out and stored in the database.

For constructing the topology database the following approach may be followed. Again, first a serving area is selected. Next, for all lines in this serving area, a representation of the topology features (such as length and gauge of each section) is obtained, for example by line testing techniques (like single-ended line testing (SELT) or double-ended line testing (DELT)). Next, all data is processed, resulting in possible groupings for each line. Next, reciprocity is verified and refinements are made. If required, the procedure can be repeated for further improvements.

In case both a crosstalk database and a topology database are available, a cross-verification of the data becomes possible. From the physics of crosstalk, it is clear that the presence of crosstalk indicates the physical presence of two pairs, at least for part of the loop. Hence, the crosstalk database can be used to further expand the topology database. Vice versa, the topology database can be mined to pick suitable candidates for a forced resync - in other words, one should first look at those blind spots which according to the topology database could or could not have some coupling.

Some more details on the main information source are now given. The database contains a list of the various serving areas. This list may be obtained by applying a segmentation on the full DSL access network. The table below represents a possible form of the field serving area'.

**Table 1 : implementation of field 'Serving area'**

| **Serving area: FIELD** | **Contains** | |
|---|---|---|
| ID | A unique ID for each serving area. | |
| vector<SLFULL> | All of the data associated with a particular subscriber line. Each of these SLFULLs will have: | |
| | ID | A unique ID number. |
| | DSLAM | The DSLAM it is connected to. |
| | PORT | The LT and port it is connected to. |
| | SL* | A link to the SL record in SLBASE (or any unique reference to that data) . |
| | NA* | A link to the DSLAM and/or NA data associated with that particular DSLAM and PORT. |
| XT | One or more crosstalk database (multiple snapshots in time). | |
| TOPOL | The topology database (multiple snapshots in time). | |

The crosstalk data records may have a shape as shown in Table 2. The stored information contains the best estimations that the monitoring tool has been able to derive of the crosstalk coupling between different lines in a particular serving area.

**Table 2 : implementation of field 'Crosstalk'**

| **XT Field** | **Contains** | |
|---|---|---|
| matrix<XTLINE> | A sparse matrix of XTLINEs, each one detailing the crosstalk from a particular line into another. Possible information it contains is: | |
| | FROM, INTO | The unique Ids of the SLFULL lines in question |
| | Cmax(f) | The upper bound on the relative crosstalk, per tone. This could be initialized to the maximum or 99% value of the new crosstalk model as agreed on in ANSI |
| | Cconf | A confidence level indicating the accuracy of Cmax(f). This could be based on the amount of measurements performed, whether it is an upper bound or a direct measurement, whether it is the initial 99% value, ... |

The records in the topology database may be organised as follows. There may be one record per loop, containing for each line the last n representations of the loop topology, a link to the network analyzer data on that line and a list of lines that might possibly be grouped with said line.

As mentioned earlier, the operator's database contains the subscriber loop SL data. These databases may be organised in many different ways according to the operator's needs and habits. However, to give an idea, Table 3 illustrates what the records of the type SL (subscriber line) contained in the SLBASE database could look like.

**Table 3 : subscriber loop data**

| **SL Field** | **Contains** |
|---|---|
| ID | Internal legacy ID number (unique) |
| Phone | Subscriber phone number |
| DSLAM | Information correlated to the location of the DSLAM, the starting point of the subscriber loop. |
| Address | Subscriber address, the end point of the subscriber loop. Might possibly be deduced from phone records via a second lookup. |
| DSLType | The type of broadband access used on the loop: {ADSL, ADSL2, ADSL2+, VDSL2} |

Some examples of use cases of the tool and method according to the present invention are the following.

Prequalifying the DSM level 3 gain at a given access node is one application. The gains achievable for a given DSLAM or group of DSLAMS by replacing the current line termination (LT) boards by DSM level 3 capable LT boards can be accurately predicted as a function of various parameters. One such parameter is the complexity if the operator has to reconnect the DSL loops to other DSL ports. By reconnecting the lines the DSM level 3 gain can be maximised. DSM level 2 can be prequalified in the same way and is not limited to the same DSLAM or to a co-located group of DSLAMs. In this case the tool for prequalifying is able to predict the gains of DSM2 in a CO/RT scenario, for instance.

Based on the crosstalk channel database it is possible to provide reconnection advice, for example to group each set of strongly coupled lines to the same line termination (LT), or the same chip on the LT, as thereby the joint processing of these lines becomes much easier. Joint processing hereby means performing crosstalk precompensation and cancellation, adjustment of transmit powers, stabilisation by adding virtual noise / artificial noise, ...

DSM level 3 prequalification can determine whether unbundling is feasible for the given access network and provide advice on how the unbundling should be implemented. When unbundling has been performed, the tool allows suggesting to a given end-customer whether it is better for him to stay with the present operator or not when he decides to move to another operator.

The prequalification may include both an estimated data rate increase and an estimated increase in reach for a given data rate. It can be performed on non-DSM level 3 LT cards. As such, an operator can evaluate the business case on a DSLAM per DSLAM basis (or per group of DSLAMs) and make sound decisions. Depending on several choices of the operator (e.g. maximize data rates or improve performance of weakest lines), the prequalification tool may provide re-grooming advice to optimize the access network tailored to the operator's need at that particular DSLAM.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. Method for prequalifying a plurality of communication channels in an access network, comprising the steps of :
- gathering information on crosstalk coupling between at least some of said communication channels from a database containing information indicative of crosstalk coupling between said at least some communication channels,
- determining prequalification information relating to said plurality of communication channels from said information from said database.

2. Method for prequalifying as in claim 1, further comprising the step of advising on reconnecting said plurality of communication channels according to said determined prequalification information.

3. Method for prequalifying as in claim 1 or 2, further comprising the step of modifying the connection of said plurality of communication channels according to said determined prequalification information.

4. Method for prequalifying as in claims 1 to 3, whereby in the step of gathering information also topology information is gathered from a database containing information on the topology of said communication channels.

5. Method for prequalifying as in any of claims 1 to 4, wherein said prequalification information comprises at least one element of the group {signal-to-noise ratio, signal-to-noise ratio gain, data rate, data rate gain, reach, reach gain, power, power reduction}.

6. Method for prequalifying as in any of claims 1 to 5, wherein said prequalification information comprises dynamic spectrum management prequalification.

7. Method for prequalifying as in any of the previous claims, wherein said plurality of communication channels is a plurality of DSL loops connected to a DSL access node or to a group of co-located DSL access nodes.

8. Method for constructing a database containing information indicative of crosstalk coupling for use in a method for prequalifying as in any of claims 1 to 7, comprising the steps of
- determining an indication of the crosstalk coupling between a first and a second channel of a plurality of communication channels of an access network,
- deriving from said determined indication an upper bound for the crosstalk coupling between said first and second communication channel, and
- storing said upper bound in the database.

9. Tool for prequalifying a plurality of communication channels in an access network, said tool comprising :
- information gathering means for gathering information from a database containing information indicative of crosstalk coupling between at least some communication channels of said plurality,
- processing means for determining prequalification information relating to said plurality of communication channels from said information from said database.

10. Tool for prequalifying as in claim 9, wherein said processing means is further arranged for advising on reconnecting said plurality of communication channels according to said determined prequalification information.

11. Tool for prequalifying as in claim 9 or 10, wherein said information gathering means is also arranged for gathering information on the topology of said communication channels.

12. Tool for prequalifying as in any of claims 9 to 11, whereby said device is integrated in an access node or in a network analyzer.

## Amended claims

### Amended claims in accordance with Rule 137(2) EPC.

**1.** Method for prequalifying a plurality of communication channels in an access network, comprising the steps of :
- gathering information on crosstalk coupling between at least some of said communication channels from a database containing information indicative of crosstalk coupling between said at least some communication channels,
- determining prequalification information relating to said plurality of communication channels from said information from said database, and
- advising on reconnecting said plurality of communication channels according to said determined prequalification information.

**2.** Method for prequalifying as in claim 1, further comprising the step of modifying the connection of said plurality of communication channels according to said determined prequalification information.

**3.** Method for prequalifying as in claims 1 or 2, whereby in the step of gathering information also topology information is gathered from a database containing information on the topology of said communication channels.

**4.** Method for prequalifying as in any of claims 1 to 3, wherein said prequalification information comprises at least one element of the group {signal-to-noise ratio, signal-to-noise ratio gain, data rate, data rate gain, reach, reach gain, power, power reduction}.

**5.** Method for prequalifying as in any of claims 1 to 4, wherein said prequalification information comprises dynamic spectrum management prequalification.

**6.** Method for prequalifying as in any of the previous claims, wherein said plurality of communication channels is a plurality of DSL loops connected to a DSL access node or to a group of co-located DSL access nodes.

**7.** Tool for prequalifying a plurality of communication channels in an access network, said tool comprising :
- information gathering means for gathering information from a database containing information indicative of crosstalk coupling between at least some communication channels of said plurality,
- processing means for determining prequalification information relating to said plurality of communication channels from said information from said database and arranged for advising on reconnecting said plurality of communication channels according to said determined prequalification information.

**8.** Tool for prequalifying as in claim 7, wherein said information gathering means is also arranged for gathering information on the topology of said communication channels.

**9.** Tool for prequalifying as in any of claims 7 to 8, whereby said device is integrated in an access node or in a network analyzer.
